# EUROPEAN PATENT SPECIFICATION

(11) **EP 3 893 076 B1**
(45) Date of publication and mention of the grant of the patent: **13.12.2023**
(21) Application number: 21165269.8
(22) Date of filing: 26.03.2021
(51) Int. Cl.: G05D 1/02, G01S 17/48, G01S 17/931

(54) **LASER GUIDED VEHICLE AND LASER GUIDED VEHICLE SYSTEM**
LASERGEFÜHRTES FAHRZEUG UND LASERGEFÜHRTES FAHRZEUGSYSTEM
VÉHICULE À GUIDAGE LASER ET SYSTÈME DE VÉHICULE À GUIDAGE LASER

(30) Priority: 09.04.2020 JP 2020070300
(43) Date of publication of application: 13.10.2021
(73) Proprietor: Mitsubishi Logisnext Co., Ltd., Kyoto 617-8585 (JP)
(72) Inventor: NODA, Hiroaki, Nagaokakyo-shi, Kyoto 617-8585 (JP); YOSHIMOTO, Akio, Nagaokakyo-shi, Kyoto 617-8585 (JP); YAMAMOTO, Ryohei, Nagaokakyo-shi, Kyoto 617-8585 (JP); SATOMURA, Hideaki, Nagaokakyo-shi, Kyoto 617-8585 (JP); TAKATAMA, Shunsuke, Nagaokakyo-shi, Kyoto 617-8585 (JP); YOSHIKAWA, Tatsurou, Nagaokakyo-shi, Kyoto 617-8585 (JP); MINOBE, Atsushi, Nagaokakyo-shi, Kyoto 617-8585 (JP); HASHIMOTO, Masaru, Nagaokakyo-shi, Kyoto 617-8585 (JP); YAMASAKI, Tomohisa, Nagaokakyo-shi, Kyoto 617-8585 (JP); MINAMI, Noriyuki, Nagaokakyo-shi, Kyoto 617-8585 (JP); TANIUCHI, Hiroki, Nagaokakyo-shi, Kyoto 617-8585 (JP); MONCHI, Masafumi, Nagaokakyo-shi, Kyoto 617-8585 (JP)
(74) Representative: Pfenning, Meinig & Partner mbB

(56) References cited:
- WO-A1-87/01814
- CN-A- 105 589 463
- DE-U1-202018 102 171
- US-A1- 2018 072 212
- US-A1- 2020 073 402

## Description

### TECHNICAL FIELD OF THE APPLICATION

The present application relates to a laser guided vehicle configured to recognize reflectors using a laser scanner so as to be moved, and a laser guided vehicle system.

### BACKGROUND OF THE APPLICATION

There is a laser guided vehicle configured to convey materials, as described in Patent Document 1. The laser guided vehicle comprises a laser scanner. The laser scanner is configured to rotate and send a laser in 360 degrees horizontally and receive the laser reflected from reflectors. The laser guided vehicle is configured to recognize a plurality of the reflectors disposed in a facility using the laser scanner.

The reflectors are fixed in the facility, and locations of the reflectors are memorized in a map of a memory. The laser guided vehicle recognizes at least three reflectors using the laser scanner so as to calculate its present location based on the principle of triangulation. The laser guided vehicle is configured to move along a predetermined route based on the calculated present location.

The laser guided vehicle comprises a pole extended from its vehicle body vertically. The laser scanner is attached on the top of the pole. Thus, there is a following problem about the laser guided vehicle. That is to say, the laser guided vehicle is not able to mount the material to be conveyed larger than the area of the vehicle body on the vehicle body due to the presence of the pole. In case that the facility is a funeral hall, the design of the vehicle body comprising the pole may damage an ambient atmosphere. Utility Model Document 1 discloses a sensor holder configured to support laser scanner on a laser guided vehicle, such that the laser scanner is attached to the bottom surface of the vehicle body. Patent Document 2 disclose a method for navigating a vehicle in which orientation of the vehicle is determined via a laser scanner on the vehicle and a plurality of reflectors in the environment. Patent Document 3 discloses a laser scanner disposed in the bottom part of a vehicle, with scanning windows upwards of the laser scanner.
Patent Document 1: JP 2000-65571 A
Patent Document 2: WO 87/ 01814 A1
Patent Document 3: CN 105 589 463 A

Utility Model Document 1: DE 20 2018 102171 U1

### PROBLEMS TO BE SOLVED BY THE APPLICATION

It is an object of the present application to provide a laser guided vehicle which can mount a material to be conveyed larger than an area of its vehicle body on the vehicle body and comprise a design of the vehicle body so as not to damage an ambient atmosphere, and a laser guided vehicle system.

### SOLUTION TO THE PROBLEMS

The objects are achieved by a laser guided vehicle according to claim 1. In particular, the present application provides a laser guided vehicle comprising: a vehicle body; a plurality of wheels projected from a bottom surface of the vehicle body downwardly and contacted on a floor of a facility; and a laser scanner configured to rotate and send a laser in 360 degrees in a horizontal direction toward a plurality of reflectors disposed in the facility, and receive the laser reflected from the reflectors. The laser scanner is attached to the bottom surface of the vehicle body and disposed between the bottom surface of the vehicle body and the floor of the facility.

According to a preferred embodiment of the present invention, the vehicle body comprises a support portion projected from the bottom surface of the vehicle body downwardly. The laser scanner comprises a base and a laser irradiation portion mounted on the base. The laser scanner is attached to the support portion in such a way that the base is disposed on the lower side of the laser scanner and the laser irradiation portion is disposed on the upper side of the laser scanner.

According to a preferred embodiment of the present invention, the support portion comprises: a first member extended in a vertical direction; a second member attached to the first member and extended in the horizontal direction; a third member attached to the second member and extended in the horizontal direction; and a plurality of bolt members configured to connect the second and third members and extended in the vertical direction. The base of the laser scanner is mounted on the third member, and a location of the vertical direction and a degree of the horizontal direction of the third member is adjusted by a rotation of each of the bolt members.

In order to achieve the objects, the present application provides the laser guided vehicle system comprising: the laser guided vehicle; and the reflectors disposed at the level of the laser scanner.

### EFFECT OF THE APPLICATION

The laser guided vehicle and the laser guided vehicle system according to the present invention can mount a material to be conveyed larger than an area of its vehicle body and comprise a design of the vehicle body so as not to damage an ambient atmosphere.

### BRIEF DESCRIPTION OF THE DRAWINGS

Fig. 1 is a side view showing a laser guided vehicle.
Fig. 2 is a bottom view showing the laser guided vehicle.
Fig. 3 is a side view showing a laser scanner and a support portion.
Fig. 4A is a plan view of a laser guided vehicle system.
Fig. 4B is a front view of the laser guided vehicle system.

### DETAILED EXPLANATION OF THE EMBODIMENTS

A laser guided vehicle and a laser guided vehicle system according to the present application will be explained hereinbelow with reference to the figures.

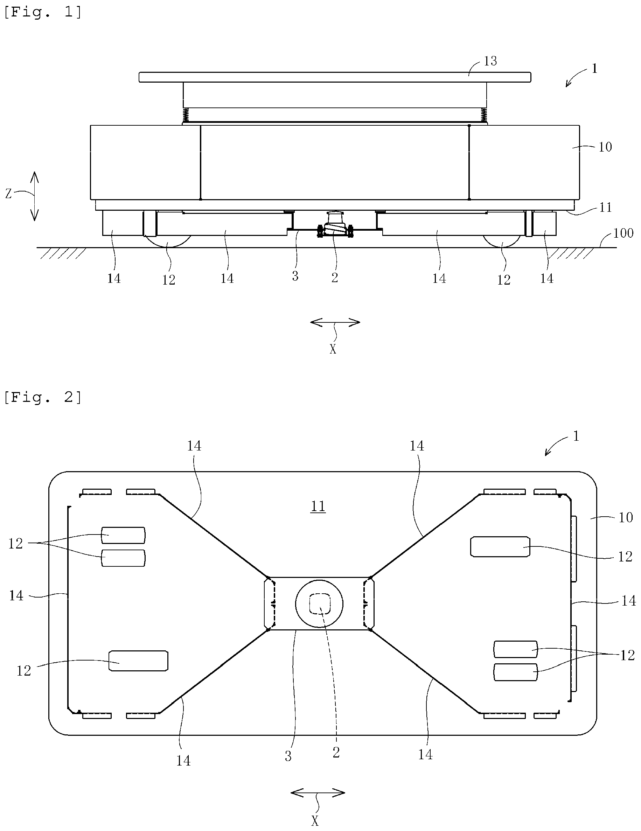

As shown in Fig. 1, the laser guided vehicle 1 (hereinafter, referred to as an "LGV ") comprises a vehicle body 10. The LGV 1 comprises a table 13 for mounting a material on the upper portion of the vehicle body 10. The LGV 1 comprises a plurality of wheels 12 projected from the bottom surface 11 of the vehicle body downwardly. The wheels 12 is contacted on a floor 100 of a facility. The LGV 1 comprises a laser scanner 2.

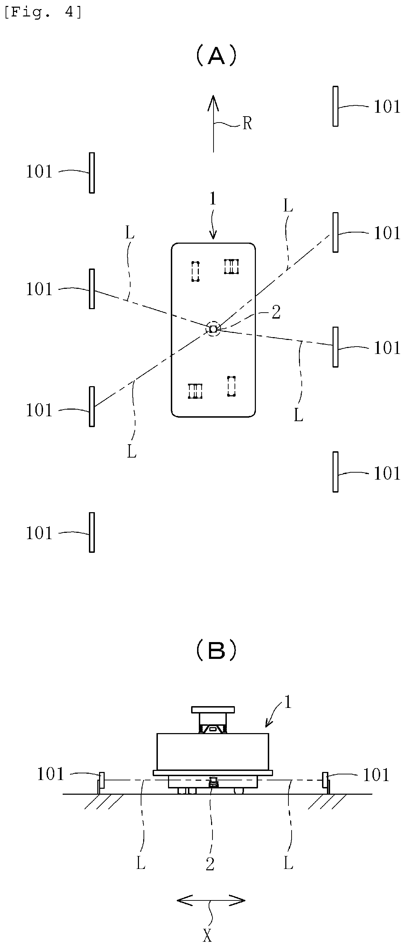

As shown in Fig. 4, the laser scanner 2 is configured to rotate and send a laser L in 360 degrees in a horizontal direction X toward a plurality of reflectors 101 disposed in the facility, and receive the laser L reflected from the reflectors 101.

As shown in Fig. 1, the laser scanner 2 is attached to the bottom surface 11 of the vehicle body, and is disposed between the bottom surface 11 of the vehicle body and the floor 100 of the facility. The vehicle body 10 comprises a support portion 3 projected from the bottom surface 11 of the vehicle body downwardly.

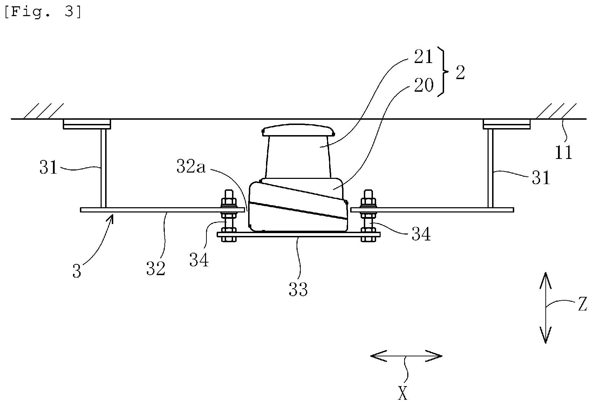

As shown in Fig. 3, the laser scanner 2 comprises a base 20, and a laser irradiation portion 21 mounted on the base 20. The laser scanner 2 is attached to the support portion 3 in such a way that the base 20 is disposed on a lower side of the laser scanner 2 and the laser irradiation portion 21 is disposed on an upper portion of the laser scanner 2.

The support portion 3 comprises first, second and third members 31, 32, 33. The first member 31 is extended in a vertical direction Z. The second member 32 is extended in the horizontal direction X. The third member 33 is also extended in the horizontal direction X. The support portion 3 further comprises bolt members 34 configured to connect the second and third members 32, 33. The first member 31 is attached to the bottom surface 11 of the vehicle body. The second member 32 is attached to a lower end of the first member 31. The third member 33 is attached to the second member 32 via a plurality of the bolt members 34.

The bolt members 34 are extended in the horizontal direction Z. The base 20 of the laser scanner 2 is mounted on the third member 33. The second member 32 includes an open portion 32a. The laser scanner 2 is projected from the second member 32 upwardly through the open portion 32a of the second member 32. The position of the vertical direction Z and the angle of the horizontal direction X of the third member 33 are adjusted by the rotation of each of the bottle members 34. Thus, the position of the vertical direction Z and the angle of the horizontal direction X of the laser scanner 2 can be adjusted easily.

As shown in Fig. 1, the LGV 1 comprises cover portions 14 projected from the bottom surface 11 of the vehicle body 10 downwardly. As shown in Fig. 2, the cover portions 14 are configured to cover the circumferences of the wheels 12. The cover portions 14 are connected with the bottom surface 11 of the vehicle body 10. The support portion 3 and the cover portions 4 are connected with each other so as not to be fell.

As shown in Fig. 2, the support portion 3 and the laser scanner 2 are disposed on the center of the vehicle body 10. The cover portions 14 are disposed at a predetermined angle from the support portion 3 and the laser scanner 2. Thus, the laser L from the laser scanner 2 can be irradiated from a wide area between each of the cover portions 14.

As shown in Fig. 4, a plurality of the reflectors 101 is installed in the facility. The laser scanner 2 is configured to rotate and send a laser L in 360 degrees in the horizontal direction X toward the reflectors 101, and receive the laser L reflected from the reflectors 101. Thus, as shown in Fig. 4B, the reflectors 101 are disposed at the level of the laser scanner 2.

The laser scanner 2 cannot irradiate the laser L all around 360 degrees due to the presence of the wheels 12. Thus, as shown in Fig. 4A, the reflectors 101 are disposed adjacent to the laser scanner 2 and arranged along a route R on the both sides of the vehicle body 10 in such a way that the laser scanner 2 can send to and receive from a predetermined number of the reflectors 101.

The LGV 1 is configured to recognize a plurality of the reflectors 101 arranged along the route R in the facility using the laser scanner 2. The reflectors 101 is fixed in the facility and location information of the reflectors 101 are memorized in a map of a memory. The LGV 1 recognizes at least the three reflectors 101 using the laser scanner 2 so as to calculate present location of the LGV 1 based on the principle of triangulation. The LGV 1 moves along the predetermined route R based on the calculated present location.

The laser scanner 2 is configured to detect the laser L reflected from the reflectors 101 so as to calculate a distance and a degree (an orientation) between the laser scanner 2 and the reflector 101. A triangle (the distance and the degree between the three reflectors) identified by the three reflectors 101 is calculated based on the distance and the degree between the laser scanner 2 and the reflector 101 when the three reflectors 101 are recognized by the laser scanner 2.

The location relationship of the three reflectors 101 recognized by the LGV 1 is compared with the location information of the predetermined memorized reflectors 101 so that the locations of the reflectors 101 recognized by the LGV 1 are identified. The distance and degree from LGV 1 to the reflectors 101 are detected based on the recognized locations of the reflectors 101 so that the present location of LGV 1 is calculated.

As described above, preferred embodiments of the present invention are explained. However, the constructions of the present invention are not limited to the embodiments. The constructions of the present invention may be changed and modified as follows.
▪ The base 20 of the laser scanner 2 may be directly attached to the bottom surface 11 of the vehicle body 10. In this case, the base 20 is disposed on the upper side of the laser scanner 2, and the laser irradiation portion 21 is disposed on the lower side of the laser scanner 2.
▪ The LGV 1 may not comprise the cover portion 14.
▪ The cover portions 14 may be colored in black so as to prevent a diffuse reflection of the laser L from the laser scanner 2.

The effect of the present invention will be explained.

In the laser guided vehicle according to the present application, the laser scanner 2 is attached to the bottom surface 11 of the vehicle body 10 and is disposed between the bottom surface 11 of the vehicle body 10 and the floor 100 of the facility.
Thus, it is possible to mount the material to be conveyed larger than the area of the vehicle 10 on the table 13 and to design the vehicle 10 so as not to damage an ambient atmosphere.

The laser scanner 2 is attached to the support portion 3 in such a way that the base 20 is disposed on the lower side of the laser scanner 2 and the laser irradiation portion 21 is disposed on the upper side of the laser scanner 2. Thus, the laser scanner 2 can be stably attached to the support portion 3. Further, it is possible to easily consolidate and adjust the laser scanner 2 and reduce the risk of the fall of the laser scanner 2.

The location of the vertical direction Z and the degree of the horizontal direction X of the third member 33 are adjusted by the rotation of each of the bolt members 34. Thus, it is possible to easily adjust the location of the vertical direction Z and the degree of the horizontal direction X of the laser scanner 2.

The reflectors 101 are installed on a low position or at the level of the laser scanner 2 attached to the bottom surface 11 of the vehicle body 10. Thus, it is possible to easily install and adjust the reflectors 101.

### EXPLANATION OF CODES

- 1: laser guided vehicle
- 10: vehicle body
- 11: bottom surface of vehicle body
- 12: wheel
- 2: laser scanner
- 20: base
- 21: laser irradiation portion
- 3: support portion
- 31: first member
- 32: second member
- 33: third member
- 34: bolt member
- 100: bottom surface of vehicle body
- 101: reflector
- L: laser
- X: horizontal direction
- Z: vertical direction
- R: route

## Claims

1. A laser guided vehicle (1) comprising:
a vehicle body (10);
a plurality of wheels (12) projected from a bottom surface (11) of the vehicle body (10) downwardly and contacted on a floor (100) of a facility; and
a laser scanner (2) configured to rotate and send a laser (L) in 360 degrees in a horizontal direction (X) toward a plurality of reflectors (101) disposed in the facility, and receive the laser (L) reflected from the reflectors (101); wherein
the laser scanner (2) is attached to the bottom surface (11) of the vehicle body (10) and disposed between the bottom surface (11) of the vehicle body (10) and the floor (100) of the facility,
the vehicle body (10) comprises a support portion (3) projected from the bottom surface (11) of the vehicle body (10) downwardly,
the laser scanner (2) comprises a base (20) and a laser irradiation portion (31) mounted on the base (20), **characterized in that**
the laser scanner (2) is attached to the support portion (3) in such a way that the base (20) is disposed on the lower side of the laser scanner (2) and the laser irradiation portion (21) is disposed on the upper side of the laser scanner (2), wherein
the support portion (3) comprises:
a first member (31) extended in a vertical direction (Z);
a second member (32) attached to the first member (31) and extended in the horizontal direction (X);
a third member (33) attached to the second member (32) and extended in the horizontal direction (X); and
a plurality of bolt members (34) configured to connect the second and third members (32, 33) and extended in the vertical direction (Z), wherein
the base (20) of the laser scanner (2) is mounted on the third member (33), and
a location of the vertical direction (Z) and a degree of the horizontal direction (X) of the third member (33) is adjusted by a rotation of each of the bolt members (34).

2. The laser guided vehicle system comprising:
the laser guided vehicle according to claim 1; and
the reflectors (101)disposed at the level of the laser scanner (2).

## Patentansprüche

1. Lasergeführtes Fahrzeug (1), umfassend:
eine Fahrzeugkarosserie (10);
eine Mehrzahl von Rädern (12), die von einer Bodenfläche (11) der Fahrzeugkarosserie (10) nach unten ragen und einen Boden (100) einer Einrichtung kontaktieren; und
einen Laserscanner (2), der eingerichtet ist, einen Laser (L) um 360 Grad in einer horizontalen Richtung (X) in Richtung einer Vielzahl von Reflektoren (101), die in der Einrichtung angeordnet sind, zu drehen und zu senden und den von den Reflektoren (101) reflektierten Laser (L) zu empfangen; wobei
der Laserscanner (2) an der Bodenfläche (11) der Fahrzeugkarosserie (10) befestigt und zwischen der Bodenfläche (11) der Fahrzeugkarosserie (10) und dem Boden (100) der Einrichtung angeordnet ist,
die Fahrzeugkarosserie (10) einen von der Bodenfläche (11) der Fahrzeugkarosserie (10) nach unten ragenden Stützabschnitt (3) umfasst,
der Laserscanner (2) eine Basis (20) und einen auf der Basis (20) montierten Laserbestrahlungsabschnitt (31) umfasst, **dadurch gekennzeichnet, dass**
der Laserscanner (2) so an dem Stützabschnitt (3) befestigt ist, dass die Basis (20) an der Unterseite des Laserscanners (2) und der Laserbestrahlungsabschnitt (21) an der Oberseite des Laserscanners (2) angeordnet ist, wobei
der Stützabschnitt (3) umfasst:
ein erstes Element (31), das sich in einer vertikalen Richtung (Z) erstreckt;
ein zweites Element (32), das an dem ersten Element (31) befestigt ist und sich in der horizontalen Richtung (X) erstreckt;
ein drittes Element (33), das an dem zweiten Element (32) befestigt ist und sich in der horizontalen Richtung (X) erstreckt; und
eine Mehrzahl von Bolzenelementen (34), die eingerichtet sind, das zweite und das dritte Element (32, 33) zu verbinden und sich in der vertikalen Richtung (Z) zu erstrecken, wobei
die Basis (20) des Laserscanners (2) auf dem dritten Element (33) montiert ist, und
eine Lage der vertikalen Richtung (Z) und ein Grad der horizontalen Richtung (X) des dritten Elements (33) durch eine Drehung jedes der Bolzenelemente (34) eingestellt wird.

2. Lasergeführtess Fahrzeugsystem, umfassend:
das lasergeführte Fahrzeug nach Anspruch 1; und
die in Höhe des Laserscanners (2) angeordneten Reflektoren (101).

## Revendications

1. Véhicule à guidage laser (1) comprenant :
une carrosserie de véhicule (10) ;
une pluralité de roues (12) projetées depuis une surface inférieure (11) de la carrosserie de véhicule (10) vers le bas et en contact avec un sol (100) d'une installation ; et
un scanner laser (2) configuré pour pivoter et envoyer un laser (L) à 360 degrés dans une direction horizontale (X) vers une pluralité de réflecteurs (101) disposés dans l'installation, et recevoir le laser (L) réfléchi par les réflecteurs (101) ; dans lequel
le scanner laser (2) est fixé à la surface inférieure (11) de la carrosserie de véhicule (10) et disposé entre la surface inférieure (11) de la carrosserie de véhicule (10) et le sol (100) de l'installation,
la carrosserie de véhicule (10) comprend une partie de support (3) projetée vers le bas à partir de la surface inférieure (11) de la carrosserie de véhicule (10),
le scanner laser (2) comprend une base (20) et une partie d'irradiation laser (31) montée sur la base (20), **caractérisé en ce que**
le scanner laser (2) est fixé à la partie de support (3) de sorte que la base (20) est disposée sur le côté inférieur du scanner laser (2) et que la partie d'irradiation laser (21) est disposée sur le côté supérieur du scanner laser (2), dans lequel
la partie de support (3) comprend :
un premier élément (31) étendu dans une direction verticale (Z) ;
un deuxième élément (32) fixé au premier élément (31) et étendu dans la direction horizontale (X) ;
un troisième élément (33) fixé au deuxième élément (32) et étendu dans la direction horizontale (X) ; et
une pluralité d'éléments de boulon (34) configurés pour relier les deuxième et troisième éléments (32, 33) et étendus dans la direction verticale (Z), dans lequel
la base (20) du scanner laser (2) est montée sur le troisième élément (33), et
un emplacement de la direction verticale (Z) et un degré de la direction horizontale (X) du troisième élément (33) sont ajustés par une rotation de chacun des éléments de boulon (34).

2. Système de véhicule à guidage laser comprenant :
le véhicule à guidage laser selon la revendication 1 ; et
les réflecteurs (101) disposés au niveau du scanner laser (2).
